# EUROPÄISCHE PATENTSCHRIFT

(11) **EP 2 060 380 B1**
(45) Veröffentlichungstag und Bekanntmachung des Hinweises auf die Patenterteilung: **15.05.2013**
(21) Anmeldenummer: 08168876.4
(22) Anmeldetag: 12.11.2008
(51) Int. Cl.: B29C 45/00, B29C 45/16

(54) **Mehrschicht-Bindenaht**
Multiple layer flow line
Ligne de suture à plusieurs couches

(30) Priorität: 13.11.2007 DE 102007054075
(43) Veröffentlichungstag der Anmeldung: 20.05.2009
(73) Patentinhaber: Gealan Formteile GmbH, 95154 Oberkotzau (DE)
(72) Erfinder: Laubmann, Gerhard, 95119 Naila (DE); Braun, Thomas, 95234 Sparneck (DE); Saunus, Christian, 08223 Grünbach (DE)
(74) Vertreter: Fleuchaus, Michael A.

(56) Entgegenhaltungen:
- JP-A- 4 091 915
- JP-A- 5 305 632
- JP-A- 2004 255 621
- JP-A- 2006 103 149

## Beschreibung

Die vorliegende Erfindung betrifft ein Verfahren zur Herstellung von Bauteilen in der Mehrkomponentenspritzgusstechnik, Bauteile die mit diesem Verfahren hergestellt werden und die Verwendung von Mehrkomponentenspritzgussmaschinen zur Durchführung des Verfahrens.

Verfahren zur Herstellung von Bauteilen im Mehrkomponentenspritzguss sind im Stand der Technik bekannt. So offenbart zum Beispiel die JP 2006 103 149 ein Mehrkomponenten Kunststoffspritzbauteil und ein Verfahren zu dessen Herstellung, bei welchem bei der Verwendung von metallisch getönten Kunststoffen Fehler im Erscheinungsbild des Bauteils vermieden werden können, indem die Zuführung der Materialkomponenten so gewählt wird, daß die Bindenahte der einzelnen Schichten versetzt zu einander angeordnet sind. Darüber hinaus ist auch die JP 2001 050 466 bekannt, welche die Herstellung eines zylindrischen Mehrkomponenten-Bauteils betrifft.

Bei bekannten spritzgegossenen Bauteilen treten unter anderem fertigungsbedingte Bindenähte an Zusammenflussstellen von Fließfronten der Schmelze auf. Diese Bindenähte schwächen in bekannter Weise die Struktur von spritzgegossenen Kunststoffbauteilen. Typische Bindenahteigenschaften sind hierbei, dass bei gefüllten Materialien nur die Basisfestigkeit der ungefüllten Matrix angesetzt werden kann, oder dass bei einer anspritzpunktfernen Bindenaht sich temperaturbedingt die Fließfronten nur aneinander legen und nicht verbinden. Bauteile bei welchen unter anderem diese Probleme auftreten sind solche, die z. B. Bohrungen oder Ausbrüche inmitten der Struktur aufweisen und die bei der Herstellung wenigstens zwei Fließfronten in der Schmelze bilden.

Aufgabe der vorliegenden Erfindung ist es, die im Stand der Technik bekannten Nachteile, insbesondere den Einfiuss der Bindenahteigenschaften in Bezug auf die Bauteileigenschaften wie beispielsweise die Basisfestigkeit zur reduzieren bzw. die Festigkeitseigenschaften der so erzeugten zylindrischen Bauteile zu verbessern.

Die vorliegende Erfindung betrifft ein Spritzgussverfahren und insbesondere ein Mehrkomponentenspritzgussverfahren nach Anspruch 1 zur Herstellung eines mehrschichtigen, wenigstens teilweise aus Kunststoff gebildeten Bauteils. Gemäß der vorliegenden Erfindung wird in einem solchen Mehrkomponentenspritzgussverfahren eine Vielzahl von Materialkomponenten verwendet, die vorzugsweise in Schichten eingesetzt beziehungsweise verarbeitet werden. Diese Schichten bilden dabei das gesamte Bauteil oder Teile hiervon, wenn beispielsweise das Bauteil eine Materialausnehmung aufweist. Die Materialkomponenten bilden pro Schicht jeweils wenigstens eine Bindenaht, wobei erfindungsgemäß die Zuführung d. h. der Anspritzpunkt der verschiedenen Materialkomponenten vorzugsweise so gewählt wird, dass die sich bildenden Bindenähte der einzelnen Schichten des Bauteils zueinander versetzt angeordnet sind.

Gemäß der vorliegenden Erfindung sind die einzelnen Schichten der Materialkomponenten im Wesentlichen übereinander und konzentrisch zu einander angeordnet, wodurch sich bildlich gesprochen eine baumkuchenartige Struktur ergibt, die durch das fertigungsbedingte Zuführen der Materialkomponenten an den Stellen des Zusammenflusses des Materials pro Schicht wenigstens eine Bindenaht bildet.

Solche Bindenähte sind wie bereits ausgeführt insbesondere dahingehend problematisch, dass die Kunststoffe im Bereich der Bindenaht sich treffenden Fliesfronten derartige Eigenschaften aufweisen, die eine vollständige Verbindung zwischen den Fliesfronten nur teilweise gewährleisten und somit damit davon ausgegangen wird, dass die Materialeigenschaften wenigstens im Bereich der Bindenähte unterschiedlich von den angrenzenden Bereichen der Materialkomponenten sind.

Gemäß einer weiteren besonders bevorzugten Ausführungsform der vorliegenden Erfindung ist der Einsatz von funktionsgebundenem Material beziehungsweise Materialkomponenten derart von Einsatz festigkeitsbestimmender Eigenschaften eines vorzugsweise weiteren Materials entkoppelbar, so dass insbesondere spezifische Materialkomponenten sowohl für strukturelle, als auch festigkeitsbestimmende Eigenschaftsbereiche im Bauteil individuell eingesetzt werden können. Besonders von Vorteil ist diese Trennung des Materialseinsatzes dadurch, dass beispielsweise kostengünstige Materialien in Füllbereichen des Bauteiles eingesetzt werden können und insbesondere festigkeitsbestimmende, vorzugsweise hochwertige Materialien in entsprechenden festigkeitsbestimmenden Bereichen eingesetzt werden können. Hieraus ergibt sich beispielsweise, dass funktionsgebundene beziehungsweise funktionsprägende Materialien in einer anderen Schicht oder Bereichen eingesetzt werden als im Wesentlichen festigkeitsbestimmende Materialien beziehungsweise Füllmaterialien eingesetzt werden.

Gemäß einer weiteren besonders bevorzugten Ausführungsform ist die Anzahl der Schichten vorzugsweise an die Anzahl der Bindungsnähte im Bauteil in der Art angepasst, dass durch den schichtenförmigen Aufbau eine gezielte Verstärkung beziehungsweise Verbesserung insbesondere der mechanischen Festigkeiten des Bauteils erzielt wird.

Dabei kann beispielsweise der Funktionsbereich eines Bauteils durch die Kombination des Wandstärken- und/oder Materialmengenverhältnisses wenigstens teilweise getrennt voneinander beeinflusst werden. Ferner kann gemäß einer weiteren, besonders bevorzugten Ausführungsform der vorliegenden Erfindung hochwertiges Material ausschließlich dort eingesetzt werden, wo es bezüglich der zukünftigen Belastung des entsprechenden Bauteils notwendig ist. Ein Beispiel kann hierbei eine entsprechende Verschleißschicht des Bauteiles sein, die gezielt aus entsprechend hochwertigem Material hergestellt wird. Die restlichen Bauräume des Bauteils werden gemäß einer weiteren, besonders bevorzugten Ausführungsform der vorliegenden Erfindung mit günstigerem und/oder vorzugsweise sehr steifem Material aufgebaut, wodurch beispielsweise die Bindenaht einer Verschleißschicht unterstützt und/oder verstärkt wird.

Gemäß einer weiteren, besonders bevorzugten Ausführungsform der vorliegenden Erfindung werden strukturelle Schwachstellen im Bauteil, welche insbesondere durch Bindenähte mit verursacht werden, durch die Überlagerung wenigstens einer zweiten Materialkomponente einer entsprechend angrenzenden oder entfernt angeordneten, weiteren Schicht unterstützt beziehungsweise wenigstens teilweise ausgeglichen.

Vorzugsweise ist das Verfahren so zu verstehen, dass insbesondere die Bindenaht beziehungsweise -nähte der entsprechenden weiteren Schichten nicht überlagert werden, sondern das insbesondere die Lage der Anspritzpunkte zur Erzeugung der unterschiedlichen Schichten so gewählt werden, dass die fertigungsbedingte Erzeugung der Bindenaht versetzt zu der angrenzenden Bindenaht eine voraus gehenden Schicht angeordnet ist.

Unter versetzt wird gemäß der vorliegenden Erfindung ein Verlauf einer Bindenaht verstanden, welcher im Wesentlichen nicht der Ausrichtung einer weiteren Bindenaht einspricht. Dabei kann der Versatz sowohl durch einen Winkelversatz, einen Radialenversatz und/oder auch durch eine entsprechende achsiale Beabstandung bewirkt werden.

Gemäß einer weiteren besonders bevorzugten Ausführungsform der vorliegenden Erfindung sind die Positionen der Anspritzpunkte zur Erzeugung der unterschiedlichen Schichten in einem Winkel zwischen 0° und 180°, vorzugsweise zwischen 45° und 75° und besonders bevorzugt um circa 90° versetzt zueinander angeordnet.

Dabei ist zu berücksichtigen, dass insbesondere bei vielschichtig aufgebauten Bauteilen die unmittelbar aneinander angrenzenden Schichten möglichst keinen Kontakt der von ihnen gebildeten Bindenähte aufweisen. Gegebenenfalls kann eine punktuelle Berührung toleriert werden, wobei es besonders bevorzugt ist, dass die Bindenähte der aneinander angrenzenden Schichten möglichst voneinander entfernt angeordnet sind. Dies kann beispielsweise durch einen entsprechenden Winkelversatz bewirkt werden.

Gemäß der vorliegenden Erfindung wird das Verfahren bei Bauteilen eingesetzt, die wenigstens ein Bindenaht verursachendes Element wie beispielsweise eine Bohrung, Ausnehmung, einen Umschließungsbereich oder dergleichen aufweisen. Dabei bildet sich ein Umschließbereich immer dann, wenn eine bereits im Spritzgussraum befindliche Ausnehmung oder Struktur vorhanden ist, die zu einer Teilung der Fließfronten führt. Dabei ist zu berücksichtigen, dass im Spritzgussverfahren sich bei Elementen die beispielsweise eine durchgehende Öffnung aufweisen, sich festigungsbedingt wenigstens zwei Fließfronten ausgehend von einem Anspritzpunkt bilden, die während des Spritzvorganges ineinander übergehen und damit eine entsprechende Bindenaht bilden.

Gemäß einer weiteren, besonders bevorzugten Ausführungsform der vorliegenden Erfindung bilden vorzugsweise die außen liegenden Schichten des Bauteils eine Stützstruktur für die innen liegenden Bereiche des Bauteils. Dabei ist es ferner vorgesehen, dass insbesondere die Verbindungsstellen und/oder der Materialverbund für die umschließenden Formen beziehungsweise Segmentformen durch Formschluss, Materialverbund, Kraftschluss, Kombinationen hieraus und dergleichen bewirkt wird.

Als Material für die Erzeugung der Schichten wird gemäß der vorliegenden Erfindung wenigstens ein Material ausgewählt, dass aus einer Gruppe ausgewählt ist, die Kunststoffe wie beispielsweise duro- und/oder thermoplastischer Kunststoffe, insbesondere Polyphenylensulfid, Polypropylen, Poly-1-buten, Polyvinylchlorid, Polyvinylidenchlorid, Polymethyl-metaacrylat, Polyacrylnitril, Polystyrol, Polyacetal, Polyvinylalkohol, Polyvinylacetat, lonomere, Fluorkunststoff, Polyethylen, Polyamid, insbesondere ein teilaromatisches Polyamid, Polycarbonat, Polyester, Polyphenylenoxid, Polysulfon, Polyvinylacetal, Polyurethan, chlorierter Polyether, Zellulosenitrat, Zelluloseacetat, Zelluloseether, Phenol-Harz, Harnstoff-Harz, Thioharnstoff-Harz, Melamin-Harz, Alkydharz, Allylharz, Silicon, Polyimid, Polybenzimidazol, Epoxidharz, Casein-Kunststoff, vernetztes Polyurthan, ungesättigtes Polyesterharz, Kombinationen hiervon und dergleichen aufweist.

Die vorliegende Erfindung bezieht sich auch auf die Verwendung einer Spritzgussmaschine, insbesondere einer Mehrkomponentenspritzgussmaschine zur Durchführung eines wie vorstehend bezeichneten Verfahrens.

Es liegt jedoch auch im Sinn der vorliegenden Erfindung, das Verfahren auf einer Einkomponentenspritzgussmaschine in der Art einzusetzen, dass die verschiedenen Schichten nacheinander in einer solchen Vorrichtung zur Bildung eines Bauteils aufgebaut werden.

Darüber hinaus wird als Materialkomponenten wenigstens eines der vorgenannten Materialien verstanden, wobei es ausdrücklich auch im Sinn der vorliegenden Erfindung liegt, lediglich eines der vorgenannten Materialien jeweils in den verschieden Schichten zu verwenden, wodurch die Komponenten des Bauteils nicht nur durch das Material selbst, sondern auch durch deren Anordnung und /oder Struktur bestimmt werden.

Die vorliegende Erfindung bietet eine Möglichkeit, funktionsbezogen, lokal und anwendungsspezifisch Bindenähte so zu verstärken, dass mögliche Schwachstellen / Bindenähte durch zweite oder dritte Komponenten im gefährdeten Bereich überlagert oder unterstützt werden können. Das Merkmal der Erfindung ist, dass durch die Verwendung der Mehrkomponentenspritzgusstechnik die Lage der Anspritzpunkte so variiert werden kann, dass die Bindenaht der ersten Materialkomponente immer im Versatz zur Bindenaht der Stützstruktur (Materialkomponente zwei und/oder drei) stehen kann.

Eine Multischicht-(Multilayer)-Bindenaht für ein gießgeformtes Bauteil ist vorzugsweise dadurch gekennzeichnet, dass durch den Einsatz der Mehrkomponententechnik Materialien in Kombination so aufgeteilt sind, dass die Lage der Bindenähte an einer Materialkomponente des Bauteil immer in versetzter Position zueinander stehen und die Materialkomponente der darauf folgenden Layer die Bindenaht der vorhergehenden Layer als Bindenahtsupport verstärkt.

Multischicht-Bindenähte für ein gießgeformtes Bauteil sind ferner dadurch gekennzeichnet, dass durch den Einsatz der Mehrkomponententechnik die Platzierung eines anwendungsspezifischen funktionsgebundenen Materials von der festigkeitsgebundenen Struktur eines weiteren Materials entkoppelt werden kann.

Multischicht-Bindenähte für ein gießgeformtes Bauteil sind des Weiteren dadurch gekennzeichnet, dass durch den Einsatz der Mehrkomponententechnik die Anzahl der Layers anwendungsspezifisch der Anzahl der Bindenähte anzupassen ist, so dass Bauteile gezielt verstärkt werden können.

Multischicht-Bindenähte für ein gießgeformtes Bauteil sind darüber hinaus dadurch gekennzeichnet, dass durch den Einsatz der Mehrkomponententechnik die einzelnen Funktionsbereiche über eine Kombination von Wandstärkenverhältnissen und/oder Materialmengenverhältnissen so getrennt werden können, dass im Bedarfsfall sehr teure Materialien für bestimmte Verschleißschichten eingebaut werden können und der Restbauraum am Bauteil mit günstigerem, sehr steifen Material aufgefüllt werden kann, um die Bindenaht der Verschleißschicht zu unterstützen.

Dabei zeigen:
- Fig. 1: ein im Spritzgussverfahren hergestelltes Bauteil gemäß dem Stand der Technik;
- Fig. 2a: ein im Mehrkomponentenspritzgussverfahren hergestelltes Bauteil in einer schematisierten Draufsicht;
- Fig. 2b: erste Materialkomponente des Bauteils gemäß Figur 2a;
- Fig. 2c: zweite Materialkomponente des Bauteils gemäß Figur 2a;
- Fig. 2d: perspektivischer Ansicht des Bauteils gemäß Figur 2a;
- Fig. 3a: ein im Mehrkomponentenspritzgussverfahren hergestelltes Bauteil gemäß der vorliegenden Erfindung in perspektivischer Ansicht;
- Fig. 3b: erste Materialkomponente des Bauteils gemäß Figur 3a;
- Fig. 3c: zweite Materialkomponente des Bauteils gemäß Figur 3a;
- Fig. 3d: Bauteil gemäß Fig. 3a in einer schematisierten Draufsicht.

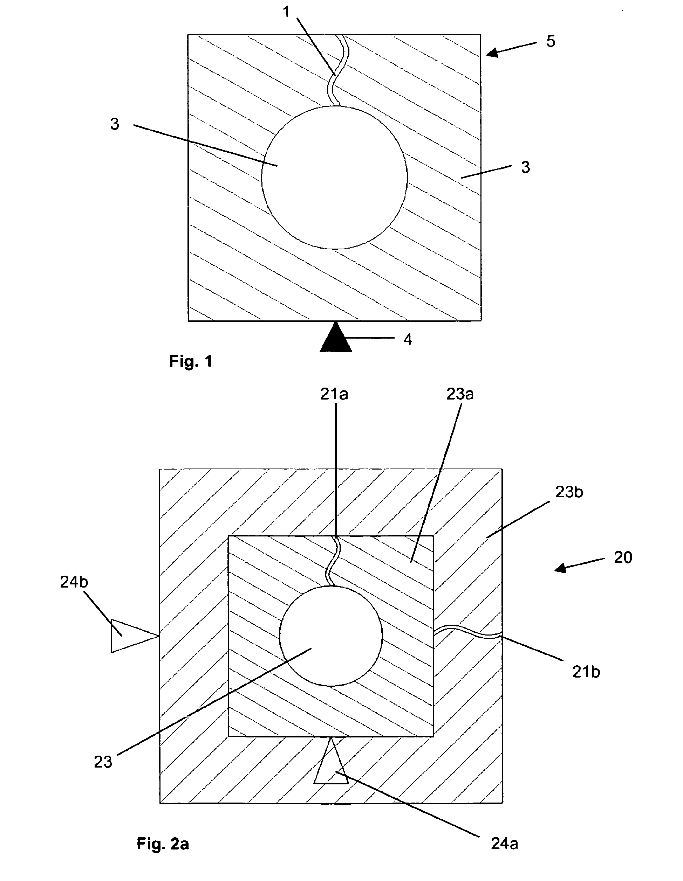

Figur 1 zeigt ein im Spritzgussverfahren hergestelltes Bauteil gemäß dem Stand der Technik. Dabei ist das Bauteil mit dem Bezugszeichen 5 gekennzeichnet und weist mittig eine Bohrung 3 auf. Entsprechend dem Spritzgussverfahren ist ein Anspritzpunkt 4 für das Zuführen der Kunststoffmasse dargestellt. Die Kunststoffmasse breitet sich entsprechend während dem Spritzgussprozess um die Durchgangsöffnung 3 herum aus und bildet auf der dem Anspritzpunkt abgewandten Seite die festigungsbedingte Bindenaht 1. Da sich bei einem entsprechenden Spritzgussprozess immer bei Vorliegen einer entsprechenden Ausnehmung 3 eine Aufteilung des Materials in wenigstens zwei Fließfronten ergibt, ist es unumgänglich, dass eine entsprechende Bindenaht beim Zusammentreffen der beiden Fließfronten entsteht.

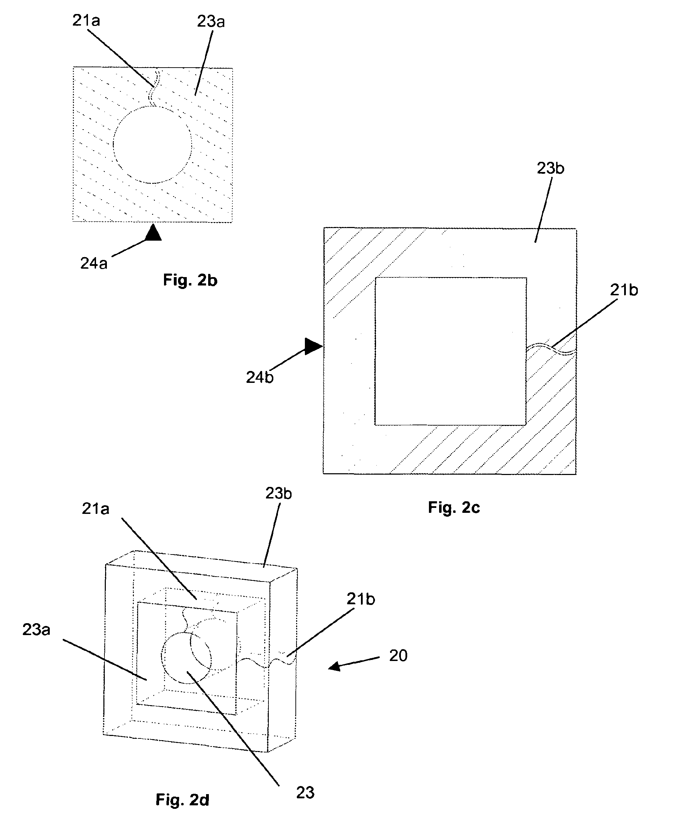

Figur 2 stellt ein Bauteil 20 dar, welches im Mehrkomponentenspritzgussverfahren hergestellt wird. Dabei wird in einem ersten Schritt des Spritzgussverfahrens die Schicht 23a über den Anspritzpunkt 24a erzeugt, bei welchem sich das Material um die Ausnehmung 23 herum ausbreitet. Zum Abschluss des Spritzgussverfahrens stoßen die beiden Materialfronten im Bereich der Bindenaht 21 a zusammen und bilden die Bindenaht 21 a. In einem zweiten Spritzgussprozess wird um die Schicht 23a herum die zweite Schicht 23b erzeugt, wobei hier der Anspritzpunkt 24b um 45° versetzt von dem Anspritzpunkt 24a abgeordnet ist. Durch diesen Anspritzpunkt 24b wird wiederum eine zweiteilige Fließfront des Materials erzeugt, die sich sowohl im Uhrzeigersinn als auch gegen den Uhrzeigersinn um die bereits vorgespritzte Schicht 23a verläuft und zum Abschluss dieses Spritzprozesses die Bindenaht 21 b erzeugt.

Wie der Figur 2a zu entnehmen ist, wird durch die geschickte Wahl der Anspritzpunkte 24a und 24b zwei versetzt zueinander angeordnete Bindenähte 21 a und 21 b erzeugt, wodurch insbesondere bei entsprechender Verbindung zwischen den Materialkomponenten der Einzelbauteile 23a und 23b die gegebenenfalls strukturschwächeren Abschnitte im Bereich der Bindenähte 21 a, 21 b ausgeglichen beziehungsweise verbessert werden, um beispielsweise die Erfordernisse der Bauteilstabilität zu gewährleisten.

Figur 2b zeigt die erste Schicht 23a aus Fig. 2a mit dem Spritzpunkt 24a und der Bindenaht 21 a in Alleinstellung, wobei die Figur 2c dies für die zweite Schicht 23b wiedergibt. Auch hier ist ein Anspritzpunkt 24b gezeigt, der dazu führt, dass zum Abschluss des Spritzvorganges sich die Bindenaht 21 b bildet.

Figur 2d zeigt das Bauteil gemäß Figur 2a in perspektivischer Ansicht, wobei neben dem Durchbruch 23 die beiden Schichten 23a und 23b und die entsprechenden Bindenähte 21 a und 21 b zu erkennen sind.

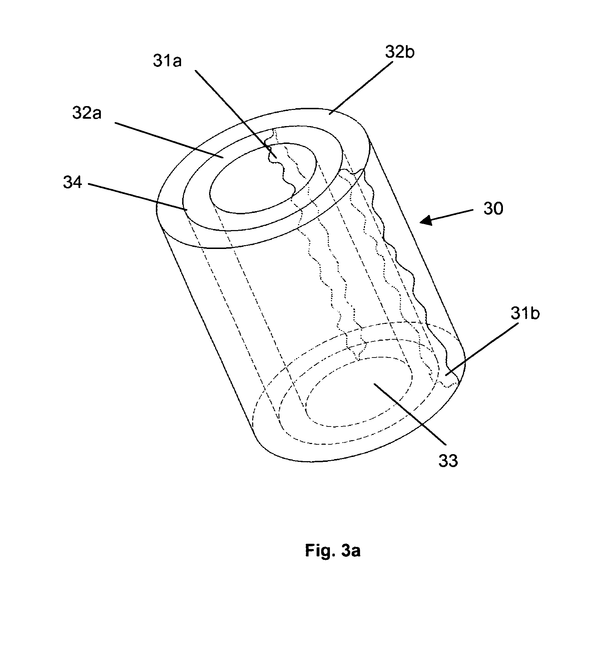

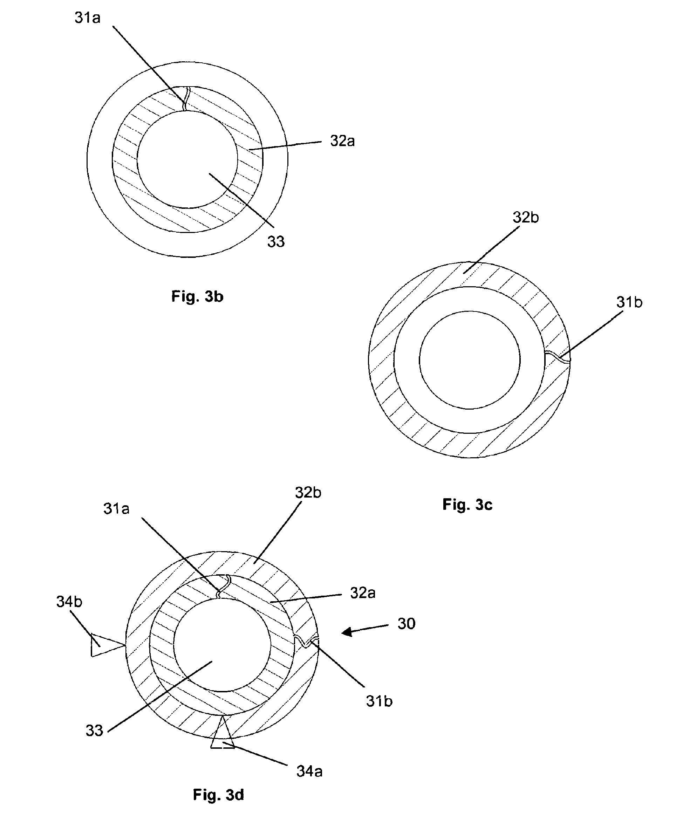

Figur 3a zeigt eine Ausführungsform eines im Mehrkomponentenspritzgussverfahren hergestellten Bauteils gemäß der vorliegenden Erfindung, wobei wiederum die beiden getrennt voneinander erzeugten Schichten 32a und 32b zu erkennen sind. Durch die in der nachfolgenden Figur 3d dargestellten Anspritzpunkte 34a, 34b wird eine entsprechenden Bindenaht 31 a und 31 b erzeugt, die bei diesem zylindrisch ausgeführten Bauteil 30 mit der Ausnehmung 33 zu einem Versatz der entsprechenden Bindenähte pro Schicht um 45° führt.

Figur 3b zeigt die erste Schicht 32a welche um die Ausnehmung 33 herum erzeugt wurde und zur Bindenaht 31 a führt. Entsprechendes ist für die zweite Schicht 32b in Figur 3c dargestellt, wobei die Schicht 32b und die Wahl eines entsprechenden Anspritzpunkts der vorzugsweise genau um 90° versetzt angeordnet ist zur Bindenaht 31 b führt.

Figur 3d zeigt das Bauteil 3a in einer Draufsicht, wobei neben den Spritzpunkten 34a und 34b zur Erzeugung der Schichten 32a und 32b auch die Bindenähte 31 a und 31 b gezeigt sind.

Selbstverständlich liegt es auch im Sinn des vorliegenden Verfahrens die Anspritzpunkte nicht nur wie sie in der Figur 3d dargestellt sind anzuordnen, sondern es können diese selbstverständlich auch entsprechend variiert werden und bei dreidimensionalen Körpern entsprechend optimiert angeordnet werden. Ziel des vorliegend erfindungsgemäßen Verfahrens ist es, insbesondere Bindenähte die bei mehrschichtig hergestellten Bauteilen, die zur Bildung wenigstens zweier Fließfronten neigen so anzuordnen, dass die entsprechend gebildeten Bindenähte unterschiedliche Positionen innerhalb des Bauteils einnehmen und durch die jeweils darüber angelagerte Schicht derart gefestigt werden, dass strukturelle Schwächen innerhalb des Bauteils ausgeglichen und damit auch die Verwendung von gegebenenfalls kostengünstigeren Materialien beziehungsweise lokal begrenzt spezifischen Materialien möglich ist.

## Patentansprüche

1. Mehrkomponentenspritzgussverfahren zur Herstellung eines mehrschichtigen, wenigstens teilweise aus Kunststoff gebildeten Bauteils (20, 30), mit einer Bohrung (3) oder Ausnehmung (23, 33), mit einer Vielzahl von Materialkomponenten, welche Schichten (22a, 22b, 32a, 32b) des Bauteils mit je wenigstens einer Bindenaht (21a, 21 b, 31 a, 31 b) bilden und die Zuführung der Materialkomponenten so gewählt wird, dass die Bindenähte (21 a, 21 b, 31 a, 31 b) der einzelnen Schichten (22a, 22b, 32a, 32b) versetzt zueinander angeordnet sind, **dadurch gekennzeichnet, dass**
bei diesem zylindrisch ausgeführten Bauteil die Schichten (22a, 22b, 32a, 32b) im Wesentlichen übereinander und konzentrisch angeordnet sind.

2. Mehrkomponentenspritzgussverfahren gemäß einem der vorstehenden Ansprüche, **dadurch gekennzeichnet, dass**
der Einsatz von funktionsgebundenem Material vom Einsatz festigkeitsbestimmender Eigenschaften eines weiteren Materials wenigstens teilweise entkoppelt wird.

3. Mehrkomponentenspritzgussverfahren gemäß einem der vorstehenden Ansprüche, **dadurch gekennzeichnet, dass**
das funktionsgebundene Material in einer anderen Schicht (22a, 22b, 32a, 32b) als das im Wesentlichen die Festigkeit bestimmende Material eingesetzt wird.

4. Mehrkomponentenspritzgussverfahren gemäß einem der vorstehenden Ansprüche, **dadurch gekennzeichnet, dass**
die Anzahl der Schichten (22a, 22b, 32a, 32b) der Anzahl der Bindungsnähte (21a, 21b, 31a, 31b) zur gezielten Verstärkung der Bauteile (20, 30) angepasst ist.

5. Mehrkomponentenspritzgussverfahren gemäß einem der vorstehenden Ansprüche, **dadurch gekennzeichnet, dass**
die Funktionsbereiche des Bauteils (20, 30) durch Kombination des Wandstärkenverhältnisses und/oder Materialmengenverhältnisses getrennt werden.

6. Mehrkomponentenspritzgussverfahren gemäß einem der vorstehenden Ansprüche, **dadurch gekennzeichnet, dass**
hochwertige, insbesondere teure Materialien für vorgegebene Verschleißschichten eingesetzt werden.

7. Mehrkomponentenspritzgussverfahren gemäß einem der vorstehenden Ansprüche, **dadurch gekennzeichnet, dass**
Restbauräume am Bauteil (20, 30) mit günstigem und vorzugsweise sehr steifen Material aufgebaut werden, welches insbesondere eine Bindenaht (21 a, 21 b, 31 a, 31 b) einer Verschleißschicht unterstützt und/ oder verstärkt.

8. Mehrkomponentenspritzgussverfahren gemäß einem der vorstehenden Ansprüche, **dadurch gekennzeichnet, dass**
strukturelle Schwachstellen im Bauteil (20, 30), insbesondere welche durch Bindenähte (21a, 21b, 31a, 31b) bewirkt werden, durch Überlagerung wenigstens einer zweiten Materialkomponente in einer weiteren Schicht (22a, 22b, 32a, 32b) unterstützt bzw. ausgeglichen werden.

9. Mehrkomponentenspritzgussverfahren gemäß einem der vorstehenden Ansprüche, **dadurch gekennzeichnet, dass**
das die Lage der Anspritzpunkte (24a, 24b, 34a, 34b) zur Erzeugung der unterschiedlichen Schichten (22a, 22b, 32a, 32b) in der Art variiert wird, das die Bindenaht (21a, 21 b, 31 a, 31 b) der unterschiedlichen Materialkomponenten versetzt zueinander angeordnet sind.

10. Mehrkomponentenspritzgussverfahren gemäß einem der vorstehenden Ansprüche, **dadurch gekennzeichnet, dass**
die Positionen der Anspritzpunkte (24a, 24b, 34a, 34b) zur Erzeugung der unterschiedlichen Schichten (22a, 22b, 32a, 32b) in einem Winkel zwischen 0° und 180°, vorzugsweise zwischen 45° und 75° und besonders bevorzugt um ca. 90° versetzt zueinander angeordnet sind.

11. Mehrkomponentenspritzgussverfahren gemäß einem der vorstehenden Ansprüche, **dadurch gekennzeichnet, dass**
die außen liegenden Schichten (22a, 22b, 32a, 32b) des Bauteils (20, 30) eine Stützstruktur für die innen liegenden Strukturen bilden.

12. Mehrkomponentenspritzgussverfahren gemäß einem der vorstehenden Ansprüche, **dadurch gekennzeichnet, dass**
die Verbindungsstelle und/oder Materialverbund für die umschließende Form und/oder Segmentform durch Formschluss, Materialverbund, Kraftschluss, Kombinationen hieraus oder dergleichen bewirkt wird.

13. Mehrkomponentenspritzgussverfahren gemäß einem der vorstehenden Ansprüche, **dadurch gekennzeichnet, dass**
wenigstens einzelne Abschnitte des Bauteils (20, 30), insbesondere die Schichten, aus wenigstens einem Werkstoff hergestellt sind, welcher aus einer Gruppe ausgewählt ist, die Kunststoffe wie beispielsweise duro- und/oder thermoplastischer Kunststoffe, insbesondere Polyphenylensulfid, Polypropylen, Poly-1-buten, Polyvinylchlorid, Polyvinylidenchlorid, Polymethylmetaacrylat, Polyacrylnitril, Polystyrol, Polyacetal, Polyvinylalkohol, Polyvinylacetat, Ionomere, Fluorkunststoff, Polyethylen, Polyamid, insbesondere ein teilaromatisches Polyamid, Polycarbonat, Polyester, Polyphenylenoxid, Polysulfon, Polyvinylacetal, Polyurethan, chlorierter Polyether, Zellulosenitrat, Zelluloseacetat, Zelluloseether, Phenol-Harz, Harnstoff-Harz, Thioharnstoff-Harz, Melamin-Harz, Alkydharz, Allylharz, Silicon, Polyimid, Polybenzimidazol, Epoxidharz, Casein-Kunststoff, vernetztes Polyurthan, ungesättigtes Polyesterharz, Kombinationen hiervon und dergleichen aufweist.

14. Verwendung einer Mehrkomponentenspritzgussmaschine zur Durchführung eines Verfahrens gemäß einem der Ansprüche 1 bis 13.

15. Bauteile insbesondere Kunststoffbauteile, welche wenigstens teilweise gemäß wenigstens einem der vorstehenden Ansprüche 1 bis 13 hergestellt sind.

## Claims

1. A multi-component injection molding method for producing a multiple-layer part (20, 30) at least partially formed of plastics, having a bore (3) or recess (23, 33) and using a plurality of material components which form layers (22a, 22b, 32a, 32b) of the part that each have at least one joint line (21a, 21b, 31a, 31b), and the supply of material components being selected such that the joint lines (21a, 21b, 31a, 31b) of the individual layers (22a, 22b, 32a, 32b) are positioned offset from one another, **characterized in that** the layers (22a, 22b, 32a, 32b) in this cylindrically configured part are arranged substantially one on top of another and concentrically.

2. The multi-component injection molding method of any preceding claim, **characterized in that**
the employment of function-specific material is at least partially decoupled from the employment of strength-determining properties of another material.

3. The multi-component injection molding method of any preceding claim, **characterized in that**
the function-specific material is employed in a different layer (22a, 22b, 32a, 32b) than the material substantially determining strength.

4. The multi-component injection molding method of any preceding claim, **characterized in that**
the number of layers (22a, 22b, 32a, 32b) is matched to the number of joint lines (21a, 21b, 31a, 31b) for targeted reinforcement of the parts (20, 30).

5. The multi-component injection molding method of any preceding claim, **characterized in that**
the functional areas of the part (20, 30) are separated by a combination of the wall thickness ratio and/or the material amount ratio.

6. The multi-component injection molding method of any preceding claim, **characterized in that**
high-quality materials, particularly materials that are expensive, are used for predetermined wear layers.

7. The multi-component injection molding method of any preceding claim, **characterized in that**
remaining spaces on the part (20, 30) are built up using cost-efficient and preferably very rigid material which supports and/or reinforces, in particular, a joint line (21a, 21b, 31a, 31b) of a wear layer.

8. The multi-component injection molding method of any preceding claim, **characterized in that**
structural weak points in the part (20, 30), particularly those caused by joint lines (21a, 21b, 31a, 31b), are supported and compensated for, respectively, by superimposing at least one second material component in another layer (22a, 22b, 32a, 32b).

9. The multi-component injection molding method of any preceding claim, **characterized in that**
the location of the injection points (24a, 24b, 34a, 34b) for creating the various layers (22a, 22b, 32a, 32b) are varied such that the joint lines (21a, 21b, 31a, 31b) of the various material components are positioned offset from one another.

10. The multi-component injection molding method of any preceding claim, **characterized in that**
the positions of the injection points (24a, 24b, 34a, 34b) for creating the various layers (22a, 22b, 32a, 32b) are offset from one another at an angle of between 0° and 180°, preferably between 45° and 75°, and particularly preferably by approximately 90°.

11. The multi-component injection molding method of any preceding claim, **characterized in that**
the exterior layers (22a, 22b, 32a, 32b) of the part (20, 30) form a support structure for the interior structures.

12. The multi-component injection molding method of any preceding claim, **characterized in that**
the connection point and/or the compound material for the enclosing shape and/or segmented shape is caused by positive engagement, compound material, frictional engagement, combinations thereof, or the like.

13. The multi-component injection molding method of any preceding claim, **characterized in that**
at least individual portions of the part (20, 30), particularly the layers, are produced from at least one material selected from a group including plastics such as duroplastics and/or thermoplastics, particularly polyphenylene sulfide, polypropylene, poly(1-butene), polyvinyl chloride, polyvinylidene chloride, polymethyl metaacrylate, polyacrylonitrile, polystyrene, polyacetal, polyvinyl alcohol, polyvinyl acetate, ionomers, fluoroplastics, polyethylene, polyamide, particularly a partially aromatic polyamide, polycarbonate, polyester, polyphenylene oxide, polysulfone, polyvinyl acetal, polyurethane, chlorinated polyether, cellulose nitrate, cellulose acetate, cellulose ether, phenolic resin, urea resin, thiourea resin, melamine resin, alkyd resin, allyl resin, silicone, polyimide, polybenzimidazole, epoxy resin, casein plastic, cross-linked polyurethane, unsaturated polyester resin, combinations thereof, and the like.

14. The use of a multi-component injection molding machine for performing a method of any of claims 1 to 13.

15. Parts, particularly plastic parts, which are at least partially manufactured according to at least one of the preceding claims 1 to 13.

## Revendications

1. Procédé de moulage par injection à plusieurs composantes destiné à la fabrication d'un composant à plusieurs couches, au moins constitué en plastique (20, 30), avec un alésage (3) ou un creux (23, 33), avec une multitude de composantes de matière, dont les couches (22a, 22b, 32a, 32b) du composant se constituent chacune d'au moins un joint collé (21a, 21 b, 31 a, 31 b) et l'alimentation des composantes de matière est sélectionnée de manière à ce que les joints collés (21 a, 21 b, 31 a, 31 b) des différentes couches (22a, 22b, 32a, 32b) sont disposés décalés les uns par rapport aux autres, **caractérisé en ce que**
sur ce composant agencé en forme cylindrique, les couches (22a, 22b, 32a, 32b) sont disposées principalement les unes sur les autres et concentriquement.

2. Procédé de moulage par injection à plusieurs composantes selon la revendication précédente, **caractérisé en ce que**
l'emploi de matière liée à une fonction est au moins découplé partiellement de l'emploi de propriétés déterminatrices de la solidité d'une autre matière.

3. Procédé de moulage par injection à plusieurs composantes selon une quelconque des revendications précédentes, **caractérisé en ce que** la matière liée à une fonction est employée dans une autre couche (22a, 22b, 32a, 32b) que la matière déterminant principalement la solidité.

4. Procédé de moulage par injection à plusieurs composantes selon une quelconque des revendications précédentes, **caractérisé en ce que** le nombre des couches (22a, 22b, 32a, 32b) est adapté au nombre des joints collés (21 a, 21 b, 31 a, 31 b) pour le renforcement ciblé des composants (20, 30).

5. Procédé de moulage par injection à plusieurs composantes selon une quelconque des revendications précédentes, **caractérisé en ce que** les zones de fonction du composant (20, 30) sont séparées par la combinaison du rapport d'épaisseur de paroi et/ou du rapport de quantité de matière.

6. Procédé de moulage par injection à plusieurs composantes selon une quelconque des revendications précédentes, **caractérisé en ce que** des matières de haute qualité, notamment chères, sont employées pour les couches d'usure prescrites.

7. Procédé de moulage par injection à plusieurs composantes selon une quelconque des revendications précédentes, **caractérisé en ce que** des espaces de construction restants sur le composant (20, 30) sont construits avec de la matière peu chère et de préférence très rigide, qui soutient et/ou renforce notamment un joint collé (21a, 21 b, 31a, 31b) d'une couche d'usure.

8. Procédé de moulage par injection à plusieurs composantes selon une quelconque des revendications précédentes, **caractérisé en ce que** des points faibles structurelles dans le composant (20, 30), qui sont notamment entraînés par desjoints collés (21a, 21b, 31a, 31b) sont soutenus et/ou compensés par superposition d'au moins une seconde composante de matière dans une autre couche (22a, 22b, 32a, 32b).

9. Procédé de moulage par injection à plusieurs composantes selon une quelconque des revendications précédentes, **caractérisé en ce que** la position des points d'injection (24a, 24b, 34a, 34b) est variée pour la génération des couches différentes (22a, 22b, 32a, 32b) de manière à ce que les joints collés (21a, 21 b, 31a, 31 b) des différentes composantes de matière sont disposés décalés les uns par rapport aux autres.

10. Procédé de moulage par injection à plusieurs composantes selon une quelconque des revendications précédentes, **caractérisé en ce que** les positions des points d'injection (24a, 24b, 34a, 34b) sont disposées pour la génération des couches différentes (22a, 22b, 32a, 32b) décalées les unes par rapport aux autres dans un angle entre 0° et 180°, de préférence entre 45° et 75° et de manière particulièrement favorisée d'env. 90°.

11. Procédé de moulage par injection à plusieurs composantes selon une quelconque des revendications précédentes, **caractérisé en ce que** les couches situées à l'extérieur (22a, 22b, 32a, 32b) du composant (20, 30) représentent une structure d'appui pour les structures situées à l'intérieur.

12. Procédé de moulage par injection à plusieurs composantes selon une quelconque des revendications précédentes, **caractérisé en ce que** le point de raccord et/ou le composite de matière pour la forme de confinage et/ou la forme de segment est accompli par fermeture du moule, composite de matière, adhérence par friction, des combinaisons de ceux-ci ou des produits similaires.

13. Procédé de moulage par injection à plusieurs composantes selon une quelconque des revendications précédentes, **caractérisé en ce que** au moins des sections individuelles du composant (20, 30), notamment les couches, sont fabriquées en un matériau qui est sélectionné à partir d'un groupe qui présente des plastiques, par exemple des plastiques duro- et/ou thermoplastiques, notamment du polysulfure de phénylène, du polypropylène, du poly-1-butylène, du chlorure de polyvinyle, du chlorure de polyvinylidène, du polyméthacrylate de méthyle, du polyacrylonitrile, du polystyrène, du polyacétal, de l'alcool polyvinylique, du polyacétate de vinyle, des ionomères, du plastique fluoré, du polyéthylène, du polyamide, notamment un polyamide aromatique partiel, du polycarbonate, du polyester, du polyphénylène oxyde, du polysulfone, de l'acétal polyvinylique, du polyuréthane, du polyéther chloré, du nitrate de cellulose, de l'acétate de cellulose, de l'éther de cellulose, de la résine phénolique, de la résine d'urée, de la résine thio-urée, de la résine de mélamine, de la résine alkyde, de la résine allylique, de la silicone, du polyimide, du polybenzimidazole, de la résine époxy, du plastique à la caséine, du polyuréthane réticulé, de la résine polyester non saturée, des combinaisons de ceux-ci et des produits similaires.

14. Utilisation d'une machine de moulage par injection à plusieurs composantes destinée à l'exécution d'un procédé selon une quelconque des revendications 1 à 13.

15. Composants, notamment composants en plastique, qui sont fabriqués au moins en partie selon au moins une quelconque des revendications précédentes 1 à 13.
